# EUROPEAN PATENT APPLICATION

(11) **EP 1 258 611 A1**
(43) Date of publication of application: **20.11.2002**
(21) Application number: 02010089.7
(22) Date of filing: 07.05.2002
(51) Int. Cl.: F02B 27/02, F02B 31/08

(54) **Air intake manifold**

(30) Priority: 15.05.2001 LU 90776
(71) Applicant: Delphi Technologies, Inc., Troy, MI 48007 (US)
(72) Inventor: Kimus, Pierre, 6717 Attert (BE); Bemtgen, Jean, 8081 Betrange (LU)
(74) Representative: Beissel, Jean

(57) **Abstract**

The present invention provides an air intake manifold (10) for providing at least one combustion chamber of an internal combustion engine with combustion air, comprising a manifold housing (18) housing at least a first and a second runner (36, 36') for providing said at least one combustion chamber with combustion air at two different locations. According to the invention, a rotatable manifold core (20) is mounted in said manifold housing (18) and co-operates with the latter so as to define said first and second runner (36, 36'), said rotatable manifold core (20) being designed so as to be capable of co-operating during its rotation with said manifold housing (18) to vary a cross-section of at least one of said first and second runners (36, 36').

## Description

The present invention relates to an air intake manifold for an internal combustion engine, in particular of the multi-cylinder type.

### State of the Art

Air intake manifolds provide the combustion chambers of the cylinders with air. Such air intake manifolds generally comprise a runner for feeding air from a central air collecting region to the individual cylinders. Under certain conditions, it is known to improve combustion conditions by generating swirls in the combustion chambers. Swirls are conventionally generated when the engine is operated under low load conditions with a lean air-fuel mixture so as to achieve a good stratification of the charge in the combustion chamber. Generally, swirls are achieved by splitting a runner into two individual symmetric air intake ducts. A flap valve is arranged in one of the air intake ducts and is movable between a first position in which the duct is entirely open and a second position in which the duct is at least partially closed. Closing the flap valve causes substantially all of the intake air to flow through the other air intake duct into the combustion chamber, thereby generating a swirl in the combustion chamber. Opening the flap valve causes a symmetric intake through both air intake ducts thus eliminating the swirl in the combustion chamber. In multi-cylinder internal combustion engines, one pair of intake ducts and a flap valve is provided for each cylinder. For the engine to run smoothly, it is necessary to open or close all flap valves simultaneously. The flap valves are therefore generally connected to shafts and levers so that they can be operated in unity. Such a flap valve system has the disadvantage that it comprises a great number of elements, i.e. one flap valve per cylinder and many seals and connection elements, which increases the potential for breakages and causes manufacturing and maintenance costs to be rather high.

### Object of the invention

The object of the present invention is to provide an improved air intake manifold, which does not have the aforementioned drawbacks. This problem is solved by an air intake manifold in accordance with claim 1.

### General description of the invention

The present invention provides an air intake manifold for providing at least one combustion chamber of an internal combustion engine with combustion air, comprising a manifold housing, housing at least a first and a second runner for providing said at least one combustion chamber with combustion air at two different locations. According to the invention, a rotatable manifold core is mounted in said manifold housing and co-operates with the latter so as to define said first and second runner, said rotatable manifold core being designed so as to be capable of co-operating during its rotation with said manifold housing to vary a cross-section of at least one of said first and second runners. By simple rotation of the rotatable manifold core within the manifold housing at least one of the runners providing combustion air to the combustion chamber can have its cross-section varied, whereby swirls can e.g. be generated in the combustion chamber.

Compared to the flap valve system, the number of elements involved is greatly reduced. This also reduces manufacturing and maintenance costs. The rotary rotatable manifold core also has an improved reliability; it ensures that all of the cylinders are operated in the same mode at any one time.

The rotatable manifold core can preferably be rotated between a first and a second position. In the first position, the first and second runners can be both fully open. In the second position, the first runner can be fully open, whereas the second runner can have its cross-section at least partially obstructed. The first and second runners are connected to two intake ports of the combustion chamber. When the combustion engine is to be operated in normal mode, the rotatable manifold core is in its first position and the air flow through the first runner is identical to the air flow through the second runner. The air flow into the combustion engine through the two intake ports is hence identical and there is no generation of swirl in the combustion chamber. When the combustion engine is to be operated in swirl mode, the rotatable manifold core is rotated into its second position and the air flow through the first runner is greater than the air flow through the second runner. The air flow into the combustion engine through one intake port is hence more important than the air flow through the other intake port and a swirl is generated in the combustion chamber. In order to switch from one mode into the other, the rotatable manifold core is simply rotated from one position into the other.

According to an embodiment of the invention, said rotatable manifold core comprises a tubular element forming a central air chamber therein and axially spaced first annular ribs extending radially from said tubular element, wherein said first annular ribs co-operate with said manifold housing to axially delimit said runners as annular spaces coiled around said tubular element. Said tubular element furthermore has a communication opening between said central air chamber and said runners. Combustion air is fed to the central air chamber and distributed through the communication opening to inlet ends of the runners. The combustion air then travels through the coiled runners towards an outlets port air intake manifold. The outlet ports of the runners are stationary, whereas the inlet ends of the runners rotate as the manifold core rotates. The length of the runners is hence variable. As the rotatable manifold core rotates into its second position, the length of the runners is increased. The performance of the air intake manifold is improved by means of such variable length runners.

Said manifold housing preferably comprises axially spaced second annular ribs co-operating with said first annular ribs to axially delimit said runners as annular spaces coiled around said tubular element.

According to an embodiment of the invention, the rotatable manifold core comprises a first shaped protrusion in the vicinity of an outlet end of the first runner, and a second shaped protrusion in the vicinity of an outlet end of the second runner.

The first shaped protrusion is preferably formed so as to allow the outlet end of the first runner to be essentially fully open when the rotatable manifold core is in its first or second position. The outlet end of the first runner is hence essentially fully open in both the normal and the swirl mode. The first shaped protrusion can for example be a generally linear piece extending from the rotatable manifold core to the manifold housing, wherein the protrusion is substantially parallel to the interior wall of the manifold housing when the rotatable manifold core is in its second position. When the rotatable manifold core is moved into its first position, the protrusion moves away from the outlet end of the first runner.

The second shaped protrusion is preferably formed so as to allow the outlet end of the second runner to be essentially fully open when the rotatable manifold core is in its first position, but to at least partially close the outlet end of the second runner when the rotatable manifold core is in its second position. The second shaped protrusion can for example be an angled piece comprising a first portion and a second portion, wherein the first portion extends from the rotatable manifold core to the manifold housing the second portion lies substantially parallel to the interior wall of the manifold housing and away from the outlet end of the second runner when the rotatable manifold core is in its first position. When the rotatable manifold core is moved into its second position, the protrusion moves into the outlet end of the second runner, thereby reducing its cross-section. In normal mode, the second shaped protrusion does not reduce the cross-section of the outlet end of the second runner. As the rotatable manifold core is rotated into its second position, the second shaped protrusion moves into the path of the air flow and reduces the cross-section of the outlet end of the second runner, thereby switching the operating mode of the cylinder to swirl mode.

The second shaped protrusion can also be formed so as to nearly fully close the outlet end of the second runner, thereby allowing air flow into the combustion chamber through the first runner only. This then causes a stronger swirl in the combustion chamber. By setting the rotatable manifold core in an intermediate position between the first position and the second position, an intermediate reduction of the cross-section of the outlet end of the second runner can be achieved. The air flow into the combustion chamber through the outlet end of the second runner can hence be controlled. It is thereby possible to control the intensity of the swirl generated in the combustion chamber.

The first shaped protrusion and/or the second shaped protrusion are preferably formed in one piece with the rotatable manifold core.

The manifold housing is advantageously formed by an upper half-shell and a lower half-shell. This allows for an easy assembly of the air intake manifold. During assembly of the air intake manifold, the rotatable manifold core is simply inserted into the lower half-shell before the upper half-shell is put on top of the rotatable manifold core to form a housing for the rotatable manifold core. The upper half-shell and the lower half-shell are then fixed together. In case of plastic half-shells, these can be fixed together by friction welding. It is however also possible to used metal half-shells which could be fixed by means of e.g. screws.

It will be appreciated that the first shaped protrusion of the first runner can also be formed so as to at least partially close the outlet end of the first runner, thereby reducing its cross-section. It is thus possible to control the overall flow of air into the combustion chamber.

### Detailed description with respect to the figures

The present invention will be more apparent from the following description of a not limiting embodiment with reference to the attached drawings, wherein
- Fig.1: is a section view through an air intake manifold at a first runner, wherein the rotatable manifold core is in its first position;
- Fig.2: is a section view through an air intake manifold at a second runner, wherein the rotatable manifold core is in a first position;
- Fig.3: is a section view through an air intake manifold at the first runner, wherein the rotatable manifold core is in its second position;
- Fig.4: is a section view through an air intake manifold at the second runner, wherein the rotatable manifold core is in its second position; and
- Fig.5: is a face view onto the rotatable manifold core.

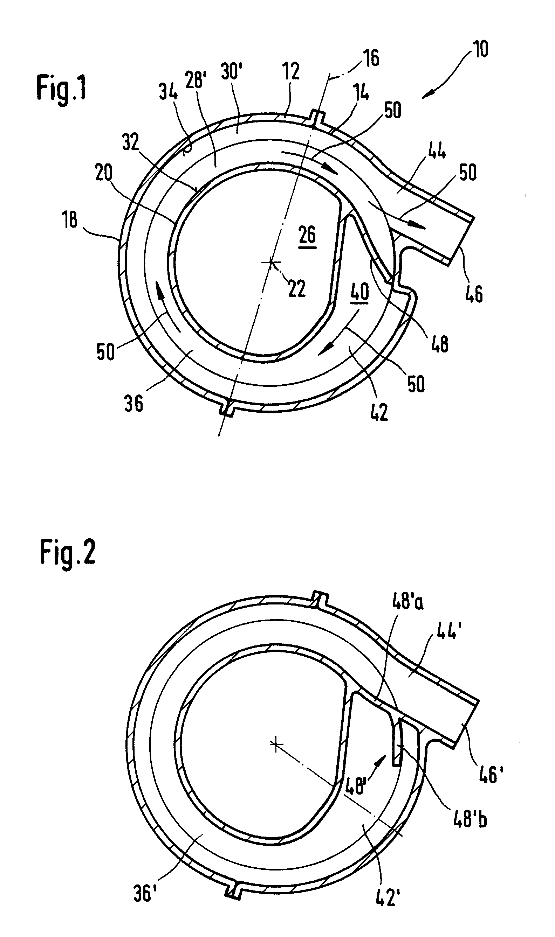

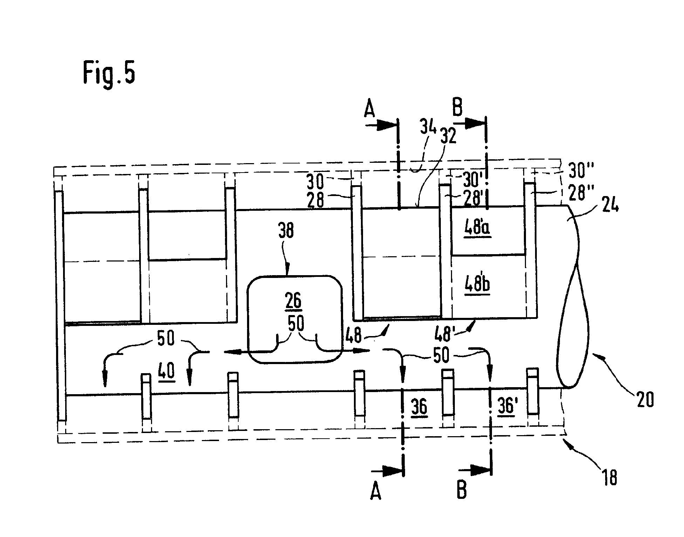

Fig.1 to Fig.4 show an air intake manifold 10 comprising an upper half-shell 12 and a lower half-shell 14 joined along a common parting plane 16 so as to form a manifold housing 18, the latter having a rotatable manifold core 20 mounted therein. The rotatable manifold core 20 is mounted in the manifold housing 18 so as to be able to rotate about a central axis 22 of the air intake manifold 10. The rotatable manifold core 20 will now be more closely described by referring to Fig.5 (a cut through the manifold housing 18 is represented by dotted lines). The rotatable manifold core 20 is a generally tubular element 24 forming a central air chamber 26 therein. Axially spaced first annular ribs 28, 28', 28" extend radially from the tubular element 24 and co-operate with axially spaced second annular ribs 30, 30', 30" of the manifold housing 18. The annular ribs 28, 30; 28', 30'; 28", 30", the exterior wall 32 of the rotatable manifold core 20 and the interior wall 34 of the manifold housing 18 delimit runners 36, 36' as annular spaces coiled around the tubular element 24. The tubular element 24 has a communication opening 38 for leading air from the central air chamber 26 to an air distribution portion 40 which allows even distribution of air to the individual runners 36, 36'.

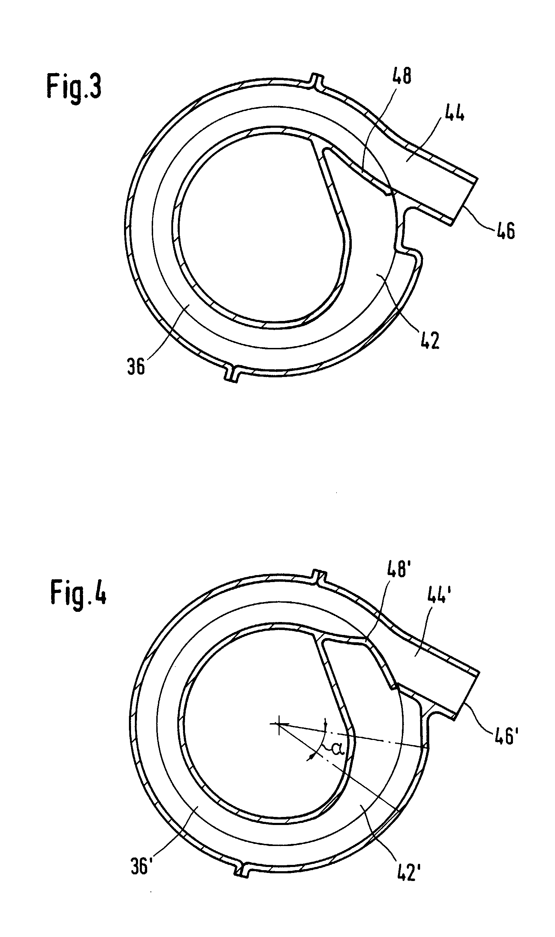

A section view through a first runner 36 is shown in Fig.1 and Fig.3 (cut through section A-A of Fig.5), whereas a section view through a second runner 36' is shown in Fig.2 and Fig.4 (cut through section B-B of Fig.5). The runners 36, 36' are in communication with the air distribution portion 40 via respective inlet ends 42, 42' and lead air from the inlet ends 42, 42' to outlet ends 44, 44', which are each in communication with an intake port 46, 46' of a combustion chamber (not shown). At the outlet ends 44, 44', the rotatable manifold core 20 comprises a first shaped protrusion 48 and a second shaped protrusion 48', respectively. The air flow from the central air chamber 26 to the intake ports 46, 46' of the combustion chamber are indicated by arrows 50.

In Fig.1 and Fig.2, the rotatable manifold core 20 is shown in its first position, whereas in Fig.3 and Fig.4, it is shown in its second position.

The first shaped protrusion 48 of the first runner 36 is a generally linear piece extending from the rotatable manifold core 20 to the manifold housing 18. When the rotatable manifold core 20 is in its second position, the protrusion 48 is substantially parallel to the interior wall 34 of the manifold housing 18 in that region, so that the outlet end 44 of the first runner 36 is essentially fully open. When the rotatable manifold core 20 is moved into its first position, the protrusion 48 moves away from the outlet end 44 of the first runner 36. The first shaped protrusion 48 is hence formed so that the outlet end 44 of the first runner 36 is essentially fully open in both the first and the second position of the rotatable manifold core 20.

The second shaped protrusion 48' of the second runner 36' is an angled piece comprising a first portion 48'ₐ and a second portion 48'_{b} extending from the rotatable manifold core 20 to the manifold housing 18. When the rotatable manifold core 20 is in its first position, the first portion 48'ₐ extends from the rotatable manifold core 20 to the manifold housing 18, whereas the second portion 48'_{b} lies substantially parallel to the interior wall 34 of the manifold housing 18 in that region, away from the outlet end 44' of the second runner 36'. When the rotatable manifold core 20 is moved into its second position, the protrusion 48' moves into the outlet end 44' of the second runner 36', thereby reducing its cross-section. The second shaped protrusion 48' of the second runner 36' is hence formed so that the outlet end 44' of the second runner 36' is essentially fully open in the first position of the rotatable manifold core 20 and partially closed in the second position of the rotatable manifold core 20.

Both the first and second shaped protrusions 48, 48' are formed in one piece with the rotatable manifold core 20.

When the combustion engine is to be operated in normal mode, i.e. without swirl in the combustion chamber, the rotatable manifold core 20 is in its first position as shown in Fig.1 and Fig.2. The outlet ends 44, 44' of both runners 36, 36' are then both fully open. The air flow through both runners 36, 36' is identical and no swirl is generated in the combustion chamber. If on the other hand the combustion engine is to be operated in swirl mode, i.e. with swirl in the combustion chamber, the rotatable manifold core 20 is rotated about its central axis 22 through an angle α into its second position, as shown in Fig.3 and Fig.4. The outlet end 44 of the first runner 36 is still fully open, whereas the outlet end 44' of the second runner 36' is partially closed. The air flow through the second runner 36' is now reduced and consequently, as the air flows through both runners 36, 36' is not identical, a swirl is generated in the combustion chamber.

## Claims

1. An air intake manifold (10), for providing at least one combustion chamber of an internal combustion engine with combustion air, comprising:
a manifold housing (18) housing at least a first and a second runner (36, 36') for providing said at least one combustion chamber with combustion air at two different locations;
**characterised by**
a rotatable manifold core (20) mounted in said manifold housing (18) and co-operating with the latter so as to define said first and second runner (36, 36'), said rotatable manifold core (20) being designed so as to be capable of co-operating during its rotation with said manifold housing (18) to vary a cross-section of at least one of said first and second runners (36, 36').

2. The air intake manifold (10) according to claim 1, wherein said rotatable manifold core (20) can be rotated between a first position, in which said first and second runners (36, 36') are both fully open, and a second position, in which said first runner (36) is fully open and said second runner (36') has its cross-section at least partially obstructed.

3. The air intake manifold (10) according to any of the previous claims, wherein:
said rotatable manifold core (20) comprises a tubular element (24) forming a central air chamber (26) therein;
said rotatable manifold core (20) comprises axially spaced first annular ribs (28, 28', 28") extending radially from said tubular element (24);
said first annular ribs (28, 28', 28") co-operating with said manifold housing (18) to axially delimit said runners (36, 36') as annular spaces coiled around said tubular element (24); and
said tubular element (24) has a communication opening (38) between said central air chamber (26) and said runners (36, 36').

4. The air intake manifold (10) according to claim 3, wherein:
said manifold housing (18) comprises axially spaced second annular ribs (30, 30', 30") co-operating with said first annular ribs (28, 28', 28") to axially delimit said runners (36, 36') as annular spaces coiled around said tubular element (24).

5. The air intake manifold (10) according to any of the previous claims, wherein said rotatable manifold core (20) comprises:
a first shaped protrusion (48) in the vicinity of an outlet end (42) of said first runner (36), and
a second shaped protrusion (48') in the vicinity of an outlet end (42') of said second runner (36').

6. The air intake manifold (10) according to claim 5, wherein said first shaped protrusion (48) is formed so as to allow said outlet end (44) of said first runner (36) to be essentially fully open when said rotatable manifold core (20) is in its first or second position.

7. The air intake manifold (10) according to claim 5 or 6, wherein said second shaped protrusion (48') is formed so as to allow said outlet end (44') of said second runner (36') to be essentially fully open when said manifold core (20) is in its first position, but to at least partially obstruct the cross-section of said second runner (36') when said rotatable manifold core (20) is in its second position.

8. The air intake manifold (10) according to claim 7, wherein said second shaped protrusion (48') is formed so as nearly fully close said outlet end (44') of said second runner (36') when said rotatable manifold core (20) is in its second position.

9. The air intake manifold (10) according to any of claims 5 to 8, wherein said first shaped protrusion (48) and/or said second shaped protrusion (48') is formed in one piece with said rotatable manifold core (20).

10. The air intake manifold (10) according to any of the preceding claims, wherein said manifold housing (18) is formed by an upper half-shell (12) and a lower half-shell (14).
